# EUROPÄISCHE PATENTSCHRIFT

(11) **EP 2 585 294 B1**
(45) Veröffentlichungstag und Bekanntmachung des Hinweises auf die Patenterteilung: **26.08.2015**
(21) Anmeldenummer: 11733790.7
(22) Anmeldetag: 24.06.2011
(51) Int. Cl.: B32B 23/02, B32B 5/18, B32B 27/42, B32B 5/28, E04C 2/24, C08J 5/04

(54) **VERFAHREN ZUR HERSTELLUNG VON SANDWICHBAUELEMENTEN UND DURCH DIESEM VERFAHREN HERGESTELLTE GEBÄUDETEILE**
METHOD FOR PRODUCING SANDWICH CONSTRUCTION ELEMENTS AND BUILDING ELEMENTS PRODUCED THEREBY
PROCÉDÉ DE FABRICATION D'ÉLÉMENTS SANDWICHS ET PARTIES DE BATIMENTS CONSTRUITS PAR CE PROCÉDÉ

(30) Priorität: 25.06.2010 DE 102010025169
(43) Veröffentlichungstag der Anmeldung: 01.05.2013
(73) Patentinhaber: Hexion GmbH, 58642 Iserlohn-Letmathe (DE); C3 Technologies GmbH, 06120 Halle (Saale) (DE)
(72) Erfinder: MÜLLER, Franz Josef, 58642 Iserlohn (DE); WERNER, Peter, 23570 Travemünde (DE); STRACKE, Peter, 58642 Iserlohn (DE)
(86) Internationale Anmeldenummer: PCT/EP2011/003105
(87) Internationale Veröffentlichungsnummer: WO 2011/160842

(56) Entgegenhaltungen:
- GB-A- 1 052 431
- GB-A- 1 278 378

## Beschreibung

Die Erfindung betrifft ein Verfahren zur Herstellung von Sandwichbauelementen für im Wesentlichen tragende und selbst tragende Gebäudeteile sowie solche Gebaudeteile hergestellt durch diesem Verfahren.

Als Sandwichbauelement wird im Allgemeinen eine Struktur aus mehreren miteinander verbundenen Schichten aus Materialien mit jeweils unterschiedlichen Eigenschaften, aufgebaut aus zwei Deckschichten und einem dazwischen liegenden Kern, bezeichnet. Eine solche bauliche Konstruktion ermöglicht, unter Einsparung von Material und Gewicht eine verbesserte Tragfähigkeit gegenüber den Ausgangsmaterialien. Insbesondere für Anwendungen im Bereich Architektur und Bauwesen erlangt der Einsatz von Sandwichbauelementen eine immer größere Bedeutung, sowohl für Verkleidungen als auch für im Wesentlichen tragende und selbst tragende Elemente. Selbsttragende Bauteile werden so definiert, dass sie ihr Eigengewicht tragen und einen Teil der Nutzlasten. Die Nutzlast (früher auch Verkehrslast) bezeichnet im Bauwesen eine veränderliche oder bewegliche Einwirkung auf ein Bauteil, z. B. infolge Personen, Einrichtungsgegenständen, Lagerstoffen, Maschinen oder Fahrzeugen. Die durch Bauteile zu erbringenden lotrechte Nutzlasten sind in DIN 1055-3:2006-03 festgelegt. Ein tragendes Bauteil ist im Gegensatz zum selbst tragenden in der Lage, sämtliche Lasten sicher abzuleiten, es übernimmt also auch die Eigen- und Nutzlasten aus anderen angrenzenden Bauteilen und leitet diese weiter. Tragende Bauteile sind in der Regel Wände, Decken, Balken, Stützen und die Gründung. So muss z. B. eine Wand als tragendes Bauteil auch die Eigenlasten und einwirkenden Nutzlasten der darüber liegenden Bauteile (z. B. Decke, Dach, darüber liegendes Wandbauteil) aufnehmen.

Der Vorteil der Verwendung von Sandwichbauelementen in der Bauindustrie besteht bisher darin, dass konstruktive Anforderungen mit Anforderungen hinsichtlich der Wärmeisolierung sowie dem Schutz gegen Umwelteinflüsse erfüllt werden können. Durch die Materialwahl der Deckschichten können gestalterischen und ästhetisch architektonischen Anforderungen in einem Höchstmaß durch die Bauelemente selbst entsprochen werden. Ein weiterer Vorteil besteht in der Langlebigkeit der Sandwichbauelemente, was die Praxis der mehr als 30 jährigen Anwendung im Bauwesen zeigt. Wesentlich ist auch, dass Errichtung von Gebäuden mittels vorgefertigten Sandwichbauelementen erheblich beschleunigt werden kann, was zu erheblichen Kostenerspamissen führt.

In der Regel wird ein leichtes Kernelement, meist ein Schaum, verwendet. Die Deckschichten bestehen üblicherweise aus Metall oder faserverstärkten Kunststoffen. Sowohl die Deckschichten als auch die Kemschicht müssen hierbei verschiedene Kräfte aufnehmen sowie Beanspruchungen standhalten, so dass sie in geeigneter Weise aufeinander abgestimmt sein müssen. Vernehmliche Aufgabe der Deckschichten ist es, Zug- und Druckkräfte aufzunehmen und abzuleiten, sowie einen mechanischen Schutz des Kernmaterials sicherzustellen.

Der Kern hat hauptsächlich die Aufgabe, die beiden Deckschichten auf Abstand zu halten und dabei entsprechende Kräfte aufzunehmen, eine Schubübertragung zwischen den Deckschichten sicherzustellen, sowie die Deckschichten gegen Beulen zu stabilisieren. Des Weiteren hat das Kernmaterial insbesondere durch Einsatz von synthetischen Schäumen eine Wärmeisolationswirkung. Ein Problem bei der Verwendung von Materialien für Schäume ist jedoch, dass diese nicht den immer stärker werdenden Brandschutzanforderungen (nicht brennbar, geringe Rauchgasdichte, geringe Rauchgastoxizität) genügen. Aus diesem Grund werden verstärkt Phenolharzschäume (z.B. DE 20 2006 004 153 U1) für Kemschichten eingesetzt, da diese durch eine räumlich stark vernetzte Molekularstruktur die hohen Brandschutzanforderungen für Anwendungen in Architektur und Bauwesen erfüllen können. Des Weiteren weisen Sandwichbauelemente mit Phenolharzschaumsystemen gegenüber marktüblichen Panelen mit Polyurethan- oder Styroporschäumen wesentlich bessere Isoliereigenschaften (Lambda = 0,022 W/mK), dadurch insbesondere hervorragende Wärmeisolierung im Extrembereich, geringere Schrumpfung und Formbeständigkeit in der Wärme sowie verbesserte Festigkeitseigenschaften unter hohen Temperaturen auf.

Allerdings ist es mit den bisherigen Verfahren der Fertigung von Sandwichbauelementen mit Phenolharzschaumkem nicht gelungen, Elemente mit selbst tragender oder im Wesentlichen tragender Funktion zu fertigen, da Phenolharzschaum eine hohe Sprödigkeit aufweist, die eine geringe Bindung zwischen Deckschichten und Schaum verursacht und somit die notwendige Übertragung von Druck, Zug- und Schubkräften unmöglich machen. Weiterhin stehen für eine industrielle Fertigung von Sandwichbauelementen bisher nur Anlagen zur Verfügung, die für die Produktion von Sandwichpanelen mit Mineralwollkemen konzipiert worden sind. Die vorgefertigten Deckschichten werden von Spulen abgewickelt und dann kontinuierlich aufgeklebt Dies bedingt, dass die Deckschichten so beschaffen sein müssen, dass sie auf Spulen aufgerollt werden zu können, d. h. eine solche Elastizität aufweisen müssen, die für die spätere Anwendung für selbst tragende und tragende Bauelemente nachteilig ist. Die Auswahl von Deckschichten und Kernmaterialien wird verfahrenstechnisch dadurch begrenzt. Daher werden bisher Phenölharzschaumkeme lediglich zur Herstellung von Verkleidungen oder mit Profilen und/oder anderen Tragelementen unterstützten Bauteilen eingesetzt.

Aus der US 3,764,428 sind geformte Produkte für Konstruktionsmaterialien für Wände, Decken und Türen bekannt, die aus einem ungebundenen Vlies aus Naturfasern und einem schäumbaren wärmehärtbaren Harz bestehen. Der Schaum kann in das ungebundene Vlies eindringen, wobei der gesamte Verbund expandiert. Es hat sich aber herausgestellt, dass ein so hergestellter Verbund nicht in ausreichendem Maße die heutigen Anforderungen hinsichtlich der Belastbarkeit für tragende und selbst tragende Bauteile erfüllt.

GB 1 052 431 offenbart ein Verfahren zur Herstellung von Sandwichbauelementen für im Wesentlichen tragende und selbst tragende Gebäudeteile folgende Schritte enthaltend: a) Herstellung zumindest einer Lage eines mit einem Bindemittel auf der Basis von zumindest einem wärmehärtbaren Harzsystem imprägnierten Faservlieses auf der Basis von natürlich vorkommenden Rohstoffen, b) Aushärtung des wärmehärtbaren Harzsystems zur Herstellung zumindest einer gehärteten Lage des Faservlieses und c) in Kontaktbringen eines geschäumten Phenolharzes mit dem Faservlies.

Aufgabe der hier vorliegenden Erfindung besteht darin, ein Sandwichelement zu fertigen, das für selbst tragende und im Wesentlichen tragende Gebäudeteile geeignet ist, da es die erforderliche Übertragung der Druck-, Zug- und Schubkräfte zwischen Deck- und Kernschicht gewährleistet und die erhöhten Brandschutzanforderungen erfüllt.

Diese Aufgabe wird erfindungsgemäß durch ein Verfahren gelöst, das folgende Schritte enthält:
a) Herstellung zumindest einer Lage eines mechanisch verfestigten und mit einem Bindemittel auf der Basis von zumindest einem wärmehärtbaren Harzsystem imprägnierten Faservlieses auf der Basis von natürlich vorkommenden Rohstoffen, insbesondere Hanf, Flachs, Jute, Sisal, Kenaf, Baumwolle und Wolle und/oder Mischungen hieraus.
b) Aushärtung des wärmehärtbaren Harzsystems zur Herstellung zumindest einer gehärteten Lage des Faservlieses, wobei vor und/oder während der Aushärtung auf die Lage des Faservlieses zumindest teilweise eine Oberflächenstruktur aufgebracht wird und/oder zumindest teilweise auf die Oberfläche der gehärteten Lage des Faservlieses zumindest ein weiteres Bindemittel auf der Basis von zumindest einem wärmehärtbaren Harzsystem aufgebracht und thermisch fixiert wird,
c) in Kontaktbringen eines in der Wärme schäumbaren oder geschäumten Phenolharzes mit der aus Schritt b) modifizierten Oberfläche zumindest einer gehärteten Lage des Faservlieses,
d) gegebenenfalls Tempern des unter a) bis c) hergestellten Verbundes bei Temperaturen in einem Bereich von 40 bis 80 °C und
e) Aushärtung des in b) gegebenenfalls aufgebrachten weiteren Bindemittels auf der Basis zumindest eines wärmehärtbaren Harzsystems in einem Bereich von 150 bis 200 °C gegebenenfalls unter erhöhtem Druck.

Überraschenderweise wird ein Sandwichbauelement erhalten, das in der Lage ist, den mechanischen Ansprüchen von selbst tragenden und im Wesentlichen tragenden Gebäudeteilen zu genügen. Gleichzeitig werden in hervorragendem Maße die Brandschutzanforderungen erfüllt.

Es konnte festgestellt werden, dass der Schaum vollständig im Temperaturbereich von 40 bis 80 °C, bevorzugt bei 50 bis 60°C, aushärtet, da eine Abkühlung unter 40°C während des Aushärteprozesses zu Spannungen im Schaum und damit verbundene Rissbildung verursacht. Diese Rissbildung, auch im mikroskopischen Bereich, führt zu einer Unbrauchbarkeit des Schaumes als Kernmaterial zur Übertragung der auftretenden statischen und dynamischen Kräfte als Bestandteil eines Sandwichbauelementes mit selbst tragender und tragender Funktion.

Das für das erfindungsgemäße Verfahren verwendete Faservlies besteht auf der Basis von natürlich vorkommenden Rohstoffen, insbesondere nachwachsenden Rohstoffen. Damit wird eine nachhaltige und ökologische Bereitstellung des Rohstoffs gewährleistet. Bevorzugt sind insbesondere Hanf, Flachs, Jute, Sisal, Kenaf, Baumwolle und Wolle und/oder Mischungen. Die grundsätzlichen Vorteile von Naturfasern für Anwendungen im Baubereich gegenüber synthetischen Fasern (Glas-, Kunstfasern, u. a.) sowie gegenüber mineralischen Naturfasern (Basalt) liegen vor allem in der weitaus besseren Ökobilanz, da Naturfasern gesundheitlich unbedenklich sind, einen weitaus geringeren Primärenergieaufwand zur Herstellung benötigen, eine neutrale CO₂-Bilanz aufweisen sowie biologisch und thermisch abgebaut werden können, daher leicht zu entsorgen bzw. zur Energiegewinnung nutzbar sind. Ein wesentlicher Vorteil gegenüber insbesondere Glasfasern besteht im Gesundheits- und Arbeitsschutz bei mechanischer Bearbeitung (z. B. Sägen, Fräsen, Bohren, usw.) der Laminate, da keine gesundheitsgefährdende Faserstaubpartikel (lungengängige Fasern) entstehen. Laminate aus Naturfasern können analog den Gesundheits- und Arbeitsschutzvorkehrungen für Holzbearbeitung behandelt werden. Die Problematik des Glasfaserstaubes bei der Bearbeitung von GFK-Laminaten und den daraus gefertigten Sandwichpanels führt insbesondere für Bauanwendungen zu erhöhtem Aufwand für Arbeits- und Umweltschutz bei Verarbeitung der Bauelemente. Für den Einsatz als Verbundwerkstoff (Sandwichbauelement) ist insbesondere die hohe Steifigkeit sowie Bruchdehnungsfähigkeit von Vorteil.

Als wärmehärtbares Harzsystem, welches als Bindemittel im Schritt a) verwendet wird, kann bevorzugt zumindest ein Harzsystem auf der Basis von Phenol-, Epoxy-, Amino- und/oder Polyesterharzen eingesetzt werden. Als zusätzliche Komponente kann das wärmehärtbare Harzsystem Elastomere und flexibilisierende Additive (z.B. Naturkautschuk, Nitrilkautschuk, Styrol-Butadien-Kautschuk, Phenoxyharze, Polyvinylacetal, Polyvinylbutyral) in einer Konzentration von 5 bis 15 Gew. bezogen auf alle Komponenten, bevorzugt 6 bis 9 Gew.%. enthalten. Diese Bestandteile bewirken, dass die Decklage wechselnden mechanischen Belastungen standhält. Weiterhin kann das wärmehärtbare Harzsystem einen Härter enthalten. An dieser Stelle sei Hexamethylentetramin genannt, wobei auch andere Härter aus dem Stand der Technik (Resole, Aminoharze, Benzoxazine) in Abstimmung mit dem verwendeten Polymerkomponenten eingesetzt werden können. Das wärmehärtbare Harzsystem enthält bezogen auf alle Komponenten in der Regel 20 bis 50 Gewichtsteile Polymerkomponente, bevorzugt 25 bis 35 Gewichtsteile, 1 bis 10 Gewichtsteile Härter, Wasser und gegebenenfalls weitere Zusatzstoffe, wie z. B. Dispergierhilfsmittel und Verarbeitungshilfsmittel.

Der Vorteil dieser Auswahl von Bindemitteln besteht darin, die im wesentlichen Festigkeits- und Elastizitätseigenschaften der Harzmatrix hinsichtlich der notwendigen Bauteilanforderungen in Abhängigkeit der Gebäudenutzung und des Gebäudestandortes optimal einstellen zu können. So zeichnen sich Phenolharzsysteme durch eine hohe Festigkeit aus, die es für Anwendungen im Bauwesen prädestiniert, um die erforderliche Steifigkeit von Gebäuden zu erreichen. Des Weiteren eignen sich Phenolharzsysteme insbesondere für Gebäude in Regionen mit hohen täglichen Temperaturschwankungen (z.B. Wüstengebiete), da dieses Harzsystem sich gegenüber den anderen Harzsystemen mit einer wesentlich besseren Temperaturstabilität und geringerer thermischer Ausdehnung auszeichnet. Epoxydharzsysteme eignen sich besonders für Gebäude in Regionen mit erhöhtem Erdbebenrisiko oder für schwimmende Häuser, da dieses Harzsystem sich gegenüber anderen Harzsystemen mit einer wesentlich besseren Elastizität auszeichnet, die den Gebäudeteilen bei plötzlichen von außen auftretenden dynamischen Belastungen eine notwendige Elastizität verschaffen, diese Kräfte aufzunehmen und abzuleiten. Melaminharzsysteme können die Oberflächenqualität der Lage positiv verbessern hinsichtlich Härte und Glanz und eignen sich besonders für Gebäudeanwendungen, bei denen diese Kriterien gefordert sind. Polyesterharzsysteme könnten sich aufgrund ihres niedrigeren Preises im Vergleich zu den anderen genannten Harzsystemen für den Einsatz zur Herstellung von Niedrigpreisgebäuden eignen, bei denen die genannten Eigenschaften der anderen Harzsysteme eine nachgeordnete Funktion haben. Generell können aber auch noch aus dem Stand der Technik bekannte Harzsysteme und deren Mischungen verwendet werden.

Da die Anforderungen an die Gebäude und die dafür verwendeten Bauelemente sehr unterschiedlich sind, ist der signifikante Vorteil des Verfahrens durch Auswahl und Kombination der Bindemittel entsprechend den geforderten Eigenschaften eine optimale Einstellung der Harzmatrix und damit der Deckschicht zu erzielen.

Möglich ist dabei auch, dass als Bindemittel zumindest zwei verschiedene wärmehärtbare Harzsysteme und/oder Bindemittelkonzentrationen und/oder Bindemittelschichten verwendet werden können. Der wesentliche Vorteil dieser Variante besteht darin, dass entsprechend der Bauteilanforderung eine Lage über ihrem Querschnitt mit unterschiedlichen Eigenschaften eingestellt werden kann. So ist z. B. eine sehr harte und feste äußere Schicht der Decklage mit einer elastischeren inneren Schicht kombinierbar. Der Vorteil dabei ist, dass zur Erzielung unterschiedlicher äußerer Schichten nicht zwei verschiedene Decklagen verbunden werden müssen, was zu nachträglicher Delaminierung führen könnte, sondern sich diese unterschiedlichen Eigenschaften im Querschnitt einer Decklage erzielen lassen. Ein weiterer Vorteil dieses Verfahrens besteht darin, dass die dem Schaum zugewandte Innenseite der Lage durch geringeren Bindemittelanteil eine offenere Harzmatrix bilden kann, wodurch der Schaum besser in Hohlräume der Faser / Matrix-Struktur eindringen kann und dadurch eine zusätzliche formschlüssige Verbindung zwischen Schaum- und strukturierter Lage erzielt wird.

Bevorzugt wird ein Phenolnovolak mit Hexamethylentetramin als Härter z. B. in lösemittelfreier, wässriger Dispersion im Verhältnis 85 bis 95 Gewichtsteile Novolak und 5 bis 15 Gewichtsteile Hexamethylentetramin, bevorzugtes Verhältnis 90:10, verwendet. Der Vorteil ist eine hohe Vernetzungsdichte, die eine gute mechanische Festigkeit und Wärmestabilität zur Folge hat.

Die Fasern werden nach an sich bekannten Verfahren mechanisch durch Nadelung oder durch Wasserstrahl verfestigt. Durch z. B. aerodynamische Vliesbildung oder Vlieslegeverfahren (Krempelprozess) erfolgt die Vliesbildung und anschließend wird das Vlies mit den jeweiligen Bindemittel(n) auf der Basis von zumindest einem wärmehärtbaren Harzsystem auf technisch unterschiedliche Weise ausgerüstet. Das verfestigte Vlies weist bevorzugt eine Grammatur von 500 bis 3000 g/m² auf. Das Gewichtsverhältnis von Bindemittel zu Fasergut kann je nach Anwendungsbereich und Beanspruchung variieren und liegt zwischen 10- 50 zu 90 - 50. Die imprägnierten einzelnen Faserschichten oder die so hergestellten imprägnierten Gelege (Halbzeuge) werden bei Temperaturen zwischen 80 und 110 °C - bevorzugt bei 90 - 100°C getrocknet oder thermisch fixiert und anschließend in an sich bekannter Weise zugeschnitten oder die imprägnierten Vliese als Planware abgelegt.

Erfindungsgemäß ist es dabei möglich dass vor und/oder während der Aushärtung des mit einem wärmehärtbaren Bindemittel imprägnierten Faservlieses zumindest teilweise eine Oberflächenstruktur auf das imprägnierte Faservlies aufgebracht wird. Besonders bevorzugt ist, wenn die Oberflächenstruktur auf der Lage des imprägnierten Faservlieses durch Einlegen eines Gitters, Rostes oder strukturierten Werkzeuges in verschiedenen Geometrien beim Aushärten der Lage erzeugt wird. Vorrangig besteht ein solches Werkzeug aus Metall. Dadurch wird die Oberfläche der Lage des imprägnierten Faservlieses vergrößert und eine größere Kontaktfläche zwischen Lage und Schaum erzeugt. Diese größere Kontaktfläche bewirkt eine Erhöhung der mechanischen Adhäsion zwischen Phenolharzschaum und Deckschicht und damit insbesondere eine Verbesserung der Schubfestigkeit. Ein weiterer Vorteil des Verfahrens besteht darin, eine zusätzliche formschlüssige Verbindung zwischen Schaum- und strukturierter Lage durch Eindringen des Phenolharzschaumes in die Senken der Oberflächengeometrie zu ermöglichen.

Von Vorteil ist weiterhin, wenn die strukturierten Werkzeuge eckige, runde, ovale, wabenförmige und/oder noppenähnliche Geometrien auf der Oberfläche der Lage des Faservlieses erzeugen, da durch die Auswahl der Oberflächengeometrie der Lage eine Verbesserung der Übertragung der auftretenden Kräfte zwischen Decklage und Schaumkem im Sandwichbauelement hinsichtlich der notwendigen Bauteilanforderungen in Abhängigkeit des Einsatzes im wesentlichen als Wand-, Decken-, Boden- oder Dachelement erzielt werden kann. So sind beispielsweise für Wandelemente Geometrien wie z. B. Streifen oder Rauten geeignet, um vorwiegend vertikal wirkende Kräfte auf das Sandwichbauelement aufzunehmen und abzuleiten. Für Decken- und Bodenelemente eignen sich besonders runde und noppenähnliche Geometrien, um die vorwiegend horizontal wirkenden Kräfte auf das Sandwichbauelement aufzunehmen und abzuleiten. Bei Dachelementen können abhängig vom Neigungswinkel ovale oder wabenförmige Geometrien von Vorteil sein.

Ergänzend oder alternativ zur Aufbringung einer Oberflächenstruktur ist es aber auch möglich, dass zumindest teilweise auf die Oberfläche der gehärteten Lage des Faservlieses zumindest ein weiteres Bindemittel auf der Basis von wärmehärtbaren Harzsystemen z. B. mittels Aufstreuen, Rakeln, Streichen, Pinseln, Rollen oder ähnlichen Verfahren aufgebracht und thermisch fixiert wird. Als Bindemittel im Schritt b) werden bevorzugt wärmehärtbare Harzsysteme auf der Basis von Phenol-, Epoxy-, und/oder Aminoharzen und/oder Polyesterharze als selbst härtende Systeme oder in Verbindung mit einem Härter - bevorzugt Phenolnovolak + Härter (bevorzugt Hexamethylentetramin) mit einem Auftragsgewicht von 10 bis 200 g/m² - bevorzugt 100 g/m² -verwendet. Dadurch wird vor dem Einschäumen des schäumbaren Phenolharzes gemäß Schritt c) ein auf der dem Schaum zugewandten Seite aufgebrachtes und thermisch fixiertes Bindemittel auf Basis eines wärmehärtbaren Harzsystems nach Abschluss des Tempems gemäß Schritt e) durch Temperaturzuführung (150 °C - 200 °C, bevorzugt 150 °C bis 170 °C)) und gegebenenfalls erhöhtem Druck aktiviert und ausgehärtet. Der Vorteil beruht im Eindringen des Bindemittels im flüssigen Zustand - vor der Aushärtung - in die Oberflächenstruktur des Schaums, so dass bei anschließender Aushärtung im Schritt e) eine zusätzliche interne Verklebung der Decklagen mit dem Schaumkem besteht. Ein weiterer Vorteil dieses Verfahrensschritts besteht darin, durch unterschiedliche Harzsysteme die Eigenschaften der Grenzschicht zwischen der Deckschicht und dem Schaumkem einstellen zu können. Wie bereits ausgeführt, ermöglichen Phenolharzsysteme die Erzielung der Festigkeit für eine geforderte Steifigkeit des Sandwichbauelements, ebenso eine geringe thermische Ausdehnung. Durch Einsatz von Epoxydharzsystemen können geforderte Elastizitätseigenschaften des Sandwichbauelements eingestellt werden. Durch Melaminharzsysteme kann die Härte des Sandwichbauelements, falls gefordert, erhöht werden. Die Verwendung verschiedener wärmehärtbarer Harzsysteme ermöglicht durch Auswahl und Kombination der Bindemittel entsprechend den Bauteilanforderungen eine optimale Einstellung der Eigenschaften und der Grenzschicht zwischen der Deckschicht und dem Schaum.

Ein weiterer Vorteil des erfindungsgemäßen Verfahrens besteht darin, dass im Schritt c) die modifizierte Oberfläche der gehärteten Lage durch Einschäumen des schäumbaren Phenolharzes mit diesem in Kontakt gebracht wird. Als Phenolharzschaum werden Zusammensetzungen verstanden, die aus einem Phenolresol und Treibmittel (bevorzugt Pentan, Hexan, Heptan) und einem aus dem Stand der Technik bekannten Härter (bevorzugt Phosphorsäure) bestehen. Die Phenolharzschaummischung besteht in der Regel bezogen auf 100 Gewichtsteile Phenolresol aus 2 bis 8 Gewichtsteile Treibmittel und 10 bis 30 Gewichtsteile Härter.

Vorteilhafterweise kann das Sandwichbauelement entsprechend der geforderten Bauteilabmessungen in einer Form produziert werden, die den geforderten Abmessungen entspricht. Dadurch kann ein homogenes Element in der geforderten Abmessung hergestellt werden. Verfahrenstechnisch hat für die Herstellung von Sandwichbauelementen der Einsatz von geschäumten Platten gegenüber aus Blockschaum geschnittenen Platten den Vorteil einer weitaus besseren Qualität durch gleichmäßige Schaumverteilung und somit homogener Schaumdichte, da bei Blockschäumen in der geforderten Größenordnung von Sandwichbauelementen das Abkühlen und Aushärten des Blocks inhomogen erfolgt und somit keine gleichbleibende Qualität erreicht werden kann. Ein weiterer Vorteil des Verfahrens besteht darin, dass für das Schäumen von Platten ein wesentlich reaktiveres Harzsystem eingesetzt werden kann, dass für die beabsichtigte Anwendung höhere Festigkeitseigenschaften und geringere Sprödigkeit gegenüber einem Harzsystem für Einsatz im Blockschaumverfahren aufweist. Des Weiteren besteht ein Vorteil des Verfahrens darin, dass der Schaum sich mit der gemäß Schritt b) hergestellten Lage beim Schäumen und Tempern/Aushärten gleichzeitig verbinden kann.

Es ist aber generell auch möglich, dass im Schritt c) die gehärtete Lage mit dem geschäumten Phenolharz verklebt wird. Dabei kann das geschäumte Phenolharz in Kernschichtdicke geschäumt werden oder aus Blockschaum geschnitten werden, wobei die in Bauteildicke geschäumten Platten gegenüber aus Blockschaum geschnittenen Platten den Vorteil einer weitaus besseren Qualität durch gleichmäßige Schaumverteilung und somit homogener Schaumdichte hat. Hierdurch kann ein in Platte geschäumter Sandwichkem in den geforderten Bauteilabmessungen produziert und anschließend mit den Decklagen verklebt werden. Weiterhin hat die Verklebung den Vorteil, dass die Lagen nicht zum Ort der Verschäumung transportiert werden müssen, sondern an einem anderen Ort mit den Schaumkemen verklebt werden können. Besonders bevorzugt ist in diesem Zusammenhang, wenn die Lagen am Produktionsort im Schritt b) mit wärmehärtbarem Harzsystem als Bindemittel fixiert und am Ort der Herstellung des Sandwichbauelementes durch thermische Aktivierung mit dem Schaumkern verklebt werden. Dadurch kann eine Dezentralisierung der Bauteilherstellung erreicht werden, was den Vorteil bietet, die Sandwichbauelemente in Nähe der Baustelle zu fertigen.

Weiterhin ist vorteilhaft, wenn auf die geschäumte Schaumoberfläche vor der Verklebung mit der Decklage eine Struktur durch mechanisches Einfräßen und/oder Einschäumen mittels einer strukturierten, nach dem Tempern bzw. Aushärtung des Schaumes wieder ablösbaren Platte, eingebracht wird. Besonders bevorzugt dabei ist wiederum, wenn diese Struktur das Negativ der Oberflächenstruktur entspricht, die in die gehärtete Lage des Faservlieses vor dem Aushärten des wärmehärtbaren Harzsystems eingebracht wurde. Dadurch wird eine bessere Anbindung zwischen Decklage und Schaum erzielt, da größere Kontaktflächen eine Erhöhung der mechanischen Adhäsion zwischen Schaum und Deckschicht bewirken und damit insbesondere zu einer Verbesserung der Schubfestigkeit führen. Durch Auswahl entsprechender Geometrien der Schichten lässt sich eine Verbesserung der Übertragung der auftretenden Kräfte zwischen Decklage und Schaumkem im Sandwichbauelement hinsichtlich der notwendigen Bauteilanforderungen in Abhängigkeit des Einsatzes im Wesentlichen als Wand-, Decken-, Boden- oder Dachelement erzielen.

Weiterhin bevorzugt ist, wenn zwischen der gehärteten Lage des Faservlieses und des schäumbaren oder geschäumten Phenolharzes Verstärkungselemente eingebracht werden. Dabei ist es beispielsweise möglich, dass diese Verstärkungselemente mit den Decklagen gemäß Schritt b) im Anschluss an Schritt d) durch thermische Aushärtung des Bindemittels verklebt werden (Schritt e). Das Material der Verstärkungslagen besteht vorzugsweise aus Glas, Basalt, und/oder Kunststoff und/oder Kohlenstoff in Form von Fasern, Gelegen, Geweben und/oder Vliesen und/öder aus derselben Materialzusammensetzung wie die Decklagen. Dadurch wird eine zusätzliche mechanische Verbindung der Decklagen mit dem Schaumkern des Sandwichbauelementes ermöglicht. Die auftretenden Druck-, Zug- und Schubkräfte innerhalb des Bauteiles können so besser übertragen und abgeleitet werden, woraus sich eine Verbesserung insbesondere der Tragwerksfunktionen des Sandwichbauelementes ergibt. Die Verbesserung der Übertragung auftretender horizontal und vertikal wirkender Kräfte innerhalb des Bauteils verringert auch die Gefahr einer möglichen Delaminierung der Deckschichten vom Schaum.

Ein weiterer Vorteil besteht in der Möglichkeit, das Sandwichbauelement durch Einbringen von internen Verstärkungselementen in Bereiche zu unterteilen, die formschlüssig mit dem Schaum ausgefüllt werden. Dadurch können spätere durch äußere Einwirkung auftretende Beschädigungen des Sandwichbauelements, z.B. Aufschlagen harter Gegenstände erheblicher Größe, wie dies z.B. bei schweren Stürmen erfolgen kann, auf die beschädigten Bereiche eingegrenzt werden und die Gesamtstabilität des Sandwichbauelements weiterhin gewährleistet werden, da sich die mechanischen Spannungen nicht weiter fortpflanzen können. Dadurch wird auch der Aufwand für notwendige Reparaturen des Sandwichbauelements nach Beschädigungen, insbesondere des Schaumkernes, deutlich reduziert.

Weiterhin ist es möglich, dass während der Erzeugung des Schaumes, sei es unmittelbar bei der Herstellung des Sandwichbauelementes (Einsatz von schäumbaren Phenolharz) oder auch bei der Herstellung von extern geschäumten Phenolharz (In Form oder im Block) in das schaumbaren oder geschäumten Phenolharzes Verstärkungselemente eingebracht werden. Die bevorzugte Möglichkeit besteht darin, interne Verstärkungselemente in den gemäß Schritt c) gefertigten Schaumkem einzubringen. Das Material dieser internen Verstärkungselemente besteht vorzugsweise aus denselben Materialen, wie die gemäß Schritt b) ausgehärteten Deckschichten, um einen homogenen Materialverbund zu ermöglichen. Möglich sind aber auch Verstärkungselemente aus phenolharzimprägniertem Natron-Kraftpapier oder auch aus Glas, Basalt, und/oder Kunststoff und/oder Kohlenstoff in Form von Fasern, Gelegen, Geweben und/oder Vliesen. Zur Verbindung mit den Deckschichten sind die gemäß Schritt b) mit einem Bindemittel ausgerüsteten Lagen in Schritt e) auszuhärten. Dadurch wird eine zusätzliche mechanische Verbindung der Decklagen miteinander durch den Schaumkem des Sandwichbauelementes ermöglicht, wodurch insbesondere bei horizontalen Bauteilen auftretende Biegekräfte von einer Lage auf die andere Lage besser übertragen und abgeleitet werden. Ebenso wird bei vertikalen Bauteilen durch diese zusätzliche mechanische Verbindung der Außenlagen die Ausbeulung des Elementes, hervorgerufen durch vertikal wirkende Lasten, verringert.

Vorteilhafterweise weisen die im Schaum eingebrachten Verstärkungselemente verschiedene Geometrien, z. B. in Form von Streifen, Rauten, Kassetten oder Sternen, auf. Dadurch kann eine Verbesserung der Übertragung der auftretenden Kräfte zwischen Decklage und Schaumkem im Sandwichbauelement hinsichtlich der notwendigen Bauteilanforderungen in Abhängigkeit des Einsatzes im Wesentlichen als Wand-, Decken-, Boden- oder Dachelement erzielt werden. So sind beispielsweise für Wandelemente Geometrien, wie z.B. Streifen oder Rauten geeignet, um vorwiegend vertikal wirkende Kräfte auf das Sandwichbauelement aufzunehmen und abzuleiten. Für Decken- und Bodenelemente eignen sich besonders Geometrien in Form von Kassetten oder Sternen, um die vorwiegend horizontal wirkenden Kräfte auf das Sandwichbauelement aufzunehmen und abzuleiten. Dabei können abhängig vom Neigungswinkel Geometrien in Kombination von Streifen mit Kassetten von Vorteil sein. Da die Anforderungen an die Gebäude und die dafür verwendeten Bauelemente sehr unterschiedlich sind, ist der signifikante Vorteil des Verfahrens, durch Auswahl, Anzahl und Dimensionierung der Verstärkungselemente, diese entsprechend der Nutzungsanforderung an das Bauteil einzubringen. So können z.B. in ein Wandelement im Erdgeschoss eines Gebäudes mehr und/oder stärkere Elemente eingebracht werden, als in ein Sandwichbauelement, das für ein Obergeschoss verwendet wird.

Als bevorzugte Variante gilt, dass während des in Kontaktbringen eines in der Wärme schäumbaren Phenolharzes mit der Oberfläche zumindest einer gehärteten Lage das Einbringen von Aussparungen und/oder Installationselementen in Form von Kanälen und anderen Formen für z.B. Steckdosen und Schaltern einhergeht. Der Vorteil besteht darin, dass durch Einschäumen der Aussparungen für Installationselemente oder das direkte Einschäumen von Installationselementen bei der Herstellung des Schaumkemes als Platte diese Aussparungen und/oder Installationselemente formschlüssig eingeschlossen werden. Dadurch wird eine mögliche spätere Beschädigung des Sandwichbauelementes insbesondere des Schaumkemes durch Schneiden, Sägen, Fräsen, Bohren und/oder weitere mechanische Verfahren vermieden. Ein weiterer Vorteil des Verfahrens besteht darin, dass durch das direkte Einschäumen der Aussparungen und/oder Installationselemente eine höhere Produktivität bei der Herstellung des Sandwichbauelements erzielt wird, da die vorgenannten mechanischen Bearbeitungsverfahren entfallen können. Vorteilhaft ist auch, dass durch Einschäumen der Installationselemente ein späteres Einkleben in die mechanisch ausgearbeiteten Hohlräume entfällt.

Für das erfindungsgemäße Verfahren wird im Schritt d) gegebenenfalls ein Tempern des unter a) bis c) hergestellten Verbundes bei Temperaturen in einem Bereich von 40 bis 80 °C, bevorzugt bei 50 bis 60 °C vorgenommen. Wie bereits erwähnt, führt eine Abkühlung unter 40 °C während des Aushärteprozesses zu Spannungen im Schaum und damit wird eine Rissbildung verhindert. Die Rissbildung, auch im mikroskopischen Bereich, führt zu einer Unbrauchbarkeit des Schaumes als Kernmaterial zur Übertragung der auftretenden statischen und dynamischen Kräfte als Bestandteil eines Sandwichbauelementes mit selbst tragender und tragender Funktion. Bei der Verwendung von bereits geschäumtem Phenolharz kann gegebenenfalls auf das Tempern des im Schritt a) bis c) Verbundes verzichtet werden, wobei vorzugsweise dann bei der externen Herstellung des Schaumes dieser Schritt vorgenommen wurde.

Anhand eines Ausführungsbeispiels soll die Erfindung näher erläutert werden:
Sandwichbauelemente für im Wesentlichen tragende und selbst tragende Gebäudeteile können entsprechend nachfolgendem Verfahren hergestellt werden:
   a) Ein durch Vemadelung oder Wasserstrahl mechanisch verfestigtes Hanf-Flachs- Krempelvlies in einer Grammatur von 500 bis 3000 g/m² - bevorzugt 1000 - 2000 g/m² - wird mit einem härtbaren Harzsystem, bevorzugt einer wässrigen, lösemittelfreien Phenolnovolakdispersion + Härter, bevorzugt Hexamethylentetramin, in einem Mischungsverhältnis von 90 Gewichtsteilen Phenolnovolak und 10 Gewichtsteilen Hexamethylentetramin, imprägniert. Die Imprägnierung erfolgte im kontinuierlichen Verfahren mit einer Standard-Rollenware in einer Breite von 1,60 m auf einer Vollbadimprägnieranlage des Vliesherstellers. Die Trockenharzmenge beträgt 10 - 50% - bevorzugt 30% - des Vliesgewichtes. Dieses imprägnierte Vlies wird durch anschließende Trocknung bei 80 - 100°C - bevorzugt 90°C Materialoberflächentemperatur - bis zur Klebfreiheit, in einem Umlufttrockner lagerstabil und transportfähig. Nach der Imprägnierung und Trocknung wurde das Vlies auf eine Breite von 1,25 m, was der späteren Bauteilbreite entspricht, geschnitten und aufgerollt.
      Von der Rolle mit dem imprägnierten Vlies wurden dann Stücke in Länge von 2,50 m durch manuelles oder mechanisches Schneiden, z. B. mit einem Querschneider oder durch Stanzen konfektioniert. Die erhaltene Größe einer Platte von 2,50 m x 1,25 m entspricht der späteren Bauteildimension.
      Durch trockene Lagerung des Materials, stellt sich die natürliche Feuchte, abhängig von der eingesetzten Faser oder Fasermischung auf ca. 8 - 12 % ein.
   b) Die auf o. g. Feuchte eingestellten Vliesplatten werden auf einer hydraulischen oder pneumatischen Heiz-Presse deren Werkzeuggröße mindestens der Plattengröße entspricht, bei einer Temperatur von 170 - 200 °C - bevorzugt 180°C - und einem Druck von 3 bis 50 kg/m² auf ca. 1 - 3 mm zu einem Laminat mit der Dichte 0,5 bis 1,5 kg/dm³, bevorzugt 1 kg/dm³, verpresst und duroplastisch ausgehärtet. Durch einen ersten Presshub von ca. 30-60 Sekunden unter minimalem Druck wird das Harzsystem aufgeschmolzen und benetzt dabei die Fasern des Vlieses vollständig. Der dabei sich entwickelnde Wasserdampf, bedingt durch die Restfeuchte im Vlies, sollte durch einen anschließenden kurzen Lüftungshub zum Entweichen gebracht werden, da der Wasserdampf den Aushärteprozess durch Bildung einer Dampfsperre innerhalb des Laminates verhindern würde. In einem zweiten Presshub wird mit maximalem Druck die geforderte Dichte des Laminates erreicht und das Harzsystem zum Aushärten gebracht. Die Aushärtezeit betrug bei dem verwendeten Harzsystem 2-5 Minuten, bevorzugt 3 Minuten bei einer Temperatur von 180°C. Nach Abschluss des Pressvorganges wird das ausgehärtete Laminat der Presse entnommen und unter Umgebungstemperatur abgekühlt.
      Um eine Struktur einseitig in das Vlies einzupressen wurde ein Strukturblech mit Dicke 0,8 mm in der Größe 1,25 x 2,50 m mit Vierkant-Löchern der Größe 0,5 cm x 0.5 cm mit dazwischen liegenden 0,5 cm breiten Stegen zwischen Vlies Presswerkzeug eingefügt. Hierdurch wurde die gewünschte Oberflächenstruktur erzielt.
      Für den Pressvorgang wurde einseitig mit Silikon beschichtetes Trennpapier zwischen Vlies und Ober- bzw. Unterpresswerkzeug bzw. zwischen Strukturblech und Presswerkzeug eingebracht, um das Presswerkzeug gegen Verschmutzungen durch das aushärtende Harzsystem zu schützen.
      Nach Abkühlung des imprägnierten und strukturierten Faservlieses wird dieses mit einem Bindemittel auf der Basis eines Phenolnovolaks (90 Gewichtsteile) und eines Härters (Hexamethylentetramin, 10 Gewichtsteile) mit einem Auftragsgewicht von 100 g/m² durch Streuen beschichtet. Anschließend wurde bei einer Oberflächentemperatur von 90 - 95°C das Harzsystem unter einem Infrarotstrahler auf dem imprägnierten und strukturierten Faservlies thermisch fixiert.
   c) Eine Lage des nach Verfahrensschritt b) ausgehärteten Naturfaservlieses wird auf den Boden eine Schaumform eingelegt, die der Bauteilgröße entspricht, z. B. Größe 2,50 x 1,25 x 0,10 m. Die mit einem Metallgerüst verstärkte Form, die einen fixierbaren Deckel besitzt, ist mit Holzwänden ausgekleidet, in die das schäumbare Phenolharz eingefüllt wird. Der Befüllvorgang kann sowohl durch ein Schaumdosiersystem, als auch durch manuelles Mischen der Schaumharzkomponenten in einem geeigneten Gefäß und anschließendes Eingießen in die Form erfolgen. Als schäumbares Phenolharz wurde ein System auf der Basis eines alkalisch kondensierten Phenolresols (100 Gewichtsteile), versetzt mit einem Treibmittel (Pentan, 3 Gewichtsteile) und einem Härter (Phosphorsäure, 20 Gewichtsteile) verwendet. Hierbei wurden zur Erzielung einer Enddichte des Schaumes von 60 kg/cbm ca. 28,5 kg Schaumharz in die Form eingefüllt. Beim Befüllen ist das Schaumharz zügig und gleichmäßig in der Form zu verteilen, um eine spätere homogene Schaumstruktur zu erreichen. Nach dem Befüllen des Schaumharzes wird eine Lage des nach Verfahrensschritt b) ausgehärteten Naturfaservlieses auf das eingefüllte Schaumharz gelegt und die Form mit dem Deckel geschlossen, allerdings nicht luftdicht, da die bei der Schaumbildung entstehende Luft zur Seite entweichen muss.
      Wie erfindungemäß erwähnt, können Verstärkungselemente verschiedener Materialien und Geometrien sowie Aussparungen und/oder Installationselemente in Form von Kanälen und anderen Formen eingebracht werden. Um einen zügigen Schäumungsprozess zu gewährleisten, wurden diese Elemente bereits auf der oberen Lage fixiert. Die Elemente wurden so positioniert, dass die bei der Schaumbildung auftretende Luft ungehindert zur Seite entweichen kann.
      Alternativ kann die Schäumung der Phenolschaumplatte auch ohne eingefügte Lagen der nach Verfahrensschritt b) ausgehärteten Naturfaservliese erfolgen. Diese können in einem weiteren Verfahrensschritt mit dem Phenolharzschaum verklebt werden.
      Nach dem Aushärteprozess des Schaumes, der beim genannten Phenolharzschaumsystem 30 Minuten dauert, kann das Bauteil der Form entnommen werden.
   d) Nach Entnehmen des Bauteiles aus der Form wurde dieses umgehend in eine Temperaturkammer gebracht und mit einer gleichmäßigen Temperatur von 65 °C über einen Zeitraum von 14 Stunden getempert. Anschlie0ßend wird das Bauteil aus der Temperaturkammer entnommen dieses auf einer hydraulischen oder pneumatischen Heiz-Presse, deren Werkzeuggröße mindestens der Plattengröße entspricht, bei einer Temperatur von 150 - 200°C - bevorzugt 180°C - durch Kontakt mit den Heizplatten ohne Einwirkung von Druck, 2-5 Minuten, bevorzugt 3 Minuten ausgehärtet. Dadurch wird das gemäß Schritt b) aufgebrachte Bindemittel aktiviert und duroplastisch ausgehärtet. Nach Abschluss des Aushärtevorganges wird das Bauteil der Presse entnommen und unter Umgebungstemperatur abgekühlt.

Nach Entnahme aus der Temperkammer bzw. nach erfolgter Aushärtung kann das Bauteil entsprechend seinem weiteren Einsatzzweck sowohl mechanisch (Sägen, Fräsen, u s w.) als auch hinsichtlich Oberflächenbeschichtung (Streichen, Lackieren, Putzen, usw.) weiterbearbeitet werden.

Es wurden vergleichende Tests gegenüber markterhältlichen Sandwichpanelen, bestehend aus GFK-Deckschichten und Polyurethan (PU) bzw. Polystyrol (EPS) Schaumkernen, die bereits für selbst tragende und tragende Bauteile verwendet werden, durchgeführt. Dabei wurden die Kennwerte hinsichtlich mechanischer Festigkeit bestehender Sandwichelemente überschritten. Sowohl bei horizontaler Druckbelastung für Bodenelemente, als auch bei vertikaler Druckbelastung für Wandelemente, zeigten die markterhäftlichen Vergleichspanels geringere Festigkeit, d.h. ein früheres Versagen, als die erfindungsgemäß hergestellten Sandwichbauelemente.

Überraschenderweise wurde beim Vergleich ermittelt, dass die gemäß dieser Erfindung hergestellten Sandwichbauelemente eine weitaus höhere Steifigkeit besitzen, als marktübliche Sandwichbauelemente mit PU oder EPS Schaumkemen, was insbesondere für Bauanwendungen von erheblichem Vorteil ist, da für Bauteile für Tragwerksfunktionen keine zusätzliche Aussteifung durch z. B. Holz oder Stahl notwendig ist. Diese Steifigkeit des Elementes an sich konnte durch bisherige markterhältliche Sandwichbauelemente mit PU/EPS Kernmaterial nicht erreicht werden.

Weiterhin zeigte sich überraschenderweise, dass die erfindungsgemäß hergestellten Sandwichbauelemente mit Phenolschaumkern ein sehr gutes Langzeitverhalten hinsichtlich Kriechverhalten aufweisen. Da bei ständiger mechanischer Beanspruchung der Bauteile Kriecherscheinungen in der Kernschicht auftreten, können Verformungen des Bauteiles auftreten, ohne dass die Belastung größer wird. Diese Verformungen waren bei den Bauteilen, hergestellt gemäß vorliegender Erfindung 3-mal geringer als bei einem Vergleichselement mit PU-Schaumkem.

Insbesondere bei den vergleichenden Brandtests wurde eine signifikante Verbesserung des Feuerwiderstandes, der Rauchgasdichte und der Rauchgastoxizität erzielt. Die Erwartungen an das Kernmaterial aus Phenolschaum hinsichtlich Verbesserung der Brandschutzanforderungen wurden erfüllt.

## Patentansprüche

1. Verfahren zur Herstellung von Sandwichbauelementen für im Wesentlichen tragende und selbst tragende Gebäudeteile folgende Schritte enthaltend:
a) Herstellung zumindest einer Lage eines mechanisch verfestigten und mit einem Bindemittel auf der Basis von zumindest einem wärmehärtbaren Harzsystem imprägnierten Faservlieses auf der Basis von natürlich vorkommenden Rohstoffen, insbesondere Hanf, Flachs, Jute, Sisal oder Kenaf, Baumwolle, Wolle und/oder Mischungen hieraus,
b) Aushärtung des wärmehärtbaren Harzsystems zur Herstellung zumindest einer gehärteten Lage des Faservlieses, wobei vor und/oder während der Aushärtung auf die Lage des Faservlieses zumindest teilweise eine Oberflächenstruktur aufgebracht wird und/oder zumindest teilweise auf die Oberfläche der gehärteten Lage des Faservlieses zumindest ein weiteres Bindemittel auf der Basis zumindest eines wärmehärtbaren Harzsystems aufgebracht und thermisch fixiert wird,
c) in Kontaktbringen eines in der Wärme schäumbaren oder geschäumten Phenolharzes mit der aus Schritt b) modifizierten Oberfläche zumindest einer gehärteten Lage des Faservlieses,
d) gegebenenfalls Tempern des unter a) bis c) hergestellten Verbundes bei Temperaturen in einem Bereich von 40 bis 80 °C und
e) Aushärtung des in b) gegebenenfalls aufgebrachten weiteren Bindemittels auf der Basis zumindest eines wärmehärtbaren Harzsystems in einem Bereich von 150 bis 200 °C, gegebenenfalls unter erhöhtem Druck.

2. Verfahren nach Anspruch 1, **dadurch gekennzeichnet, dass** die Oberflächenstruktur durch Einlegen eines Gitters, Rostes oder strukturierten Werkzeuges in verschiedenen Geometrien beim Aushärten der Lage erzeugt wird.

3. Verfahren nach Anspruch 2, **dadurch gekennzeichnet, dass** die strukturierten Werkzeuge eckige, runde, ovale, wabenförmige, noppenähnliche Geometrien auf der Oberfläche erzeugen.

4. Verfahren nach zumindest einem der vorhergehenden Ansprüche, **dadurch gekennzeichnet, dass** als Bindemittel im Schritt a) und/oder b) zumindest ein wärmehärtbares Harzsystem auf der Basis von Phenol-, Epoxy-, Amino- und/oder Polyesterharzen verwendet wird.

5. Verfahren nach zumindest einem der vorhergehenden Ansprüche, **dadurch gekennzeichnet, dass** im Schritt c) die gehärtete Lage durch Einschäumen und gegebenenfalls Verkleben des schäumbaren Phenolharzes mit diesem in Kontakt gebracht wird.

6. Verfahren nach zumindest einem der vorhergehenden Ansprüche, **dadurch gekennzeichnet, dass** im Schritt c) die gehärtete Lage mit geschäumten Phenolharz verklebt wird.

7. Verfahren nach Anspruch 6, **dadurch gekennzeichnet, dass** auf die Schaumoberfläche eine Struktur durch mechanisches Einfräßen und/oder Einschäumen einer strukturierten, nach Aushärtung des Schaums wieder ablösbaren Platte, eingebracht wird.

8. Verfahren nach zumindest einem der vorhergehenden Ansprüche, **dadurch gekennzeichnet, dass** zwischen der gehärteten Lage des Faservlieses und des schäumbaren oder geschäumten Phenolharzes Verstärkungselemente eingebracht werden.

9. Verfahren nach Anspruch 8, **dadurch gekennzeichnet, dass** die Verstärkungselemente gefertigt sind aus Glas, Basalt, und/oder Kunststoff und/oder Kohlenstoff in Form von Fasern, Gelegen, Geweben und/oder Vliesen und/oder aus derselben Materialzusammensetzung wie die Decklagen.

10. Verfahren nach zumindest einem der vorhergehenden Ansprüche, **dadurch gekennzeichnet, dass** in das schäumbare oder geschäumte Phenolharze Verstärkungselemente eingebracht werden.

11. Verfahren nach Anspruch 10, **dadurch gekennzeichnet, dass** die Verstärkungselemente verschiedene Geometrien, z. B. in Form von Streifen, Rauten, Kassetten oder Sternen, aufweisen.

12. Verfahren nach zumindest einem der vorhergehenden Ansprüche, **dadurch gekennzeichnet, dass** während des in Kontaktbringen eines in der Wärme schäumbaren Phenolharzes mit der Oberfläche zumindest einer gehärteten Lage das Einbringen von Aussparungen in Form von Kanälen und/oder Installationselementen und anderen Formen für z. B. Steckdosen und Schaltern einhergeht.

13. Im Wesentlichen tragende und selbst tragende Gebäudeteile hergestellt durch ein Verfahren nach zumindest einem der vorhergehenden Ansprüche.

## Claims

1. A method for producing sandwich construction elements for essentially loadbearing and self-supporting parts of a building, said method comprising the steps of
a) producing one or more than one ply of a mechanically consolidated fibrous fleece based on naturally occurring raw materials, especially hemp, flax, jute, sisal or kenaf, cotton, wool and/or mixtures thereof and impregnated with a binder based on one or more than one heat-curable resin system,
b) curing the heat-curable resin system to produce one or more than one cured ply of the fibrous fleece, wherein a surface structure is applied to at least part of the ply of the fibrous fleece before and/or during curing, and/or one or more than one further binder based on one or more than one heat-curable resin system is applied to at least part of the surface of the cured ply of the fibrous fleece and thermally fixed,
c) contacting a thermally foamable or foamed phenolic resin with the surface, as modified in step b), of one or more than one cured ply of the fibrous fleece,
d) optionally subjecting the composite produced under a) to c) to conditioning at temperatures in a range from 40 to 80°C, and
e) subjecting the further binder based on one or more than one heat-curable resin system and optionally applied in b) to curing in a range from 150 to 200°C, optionally under elevated pressure.

2. The method as claimed in claim 1, **characterized in that** the surface structure is produced in various geometries by placing a lattice, grid or structured tool on the ply as it cures.

3. The method as claimed in claim 2, **characterized in that** the structured tools produce angular, round, oval, honeycomb-shaped, dimplelike geometries on the surface.

4. The method as claimed in one or more than one preceding claim, **characterized in that** the binder used in step a) and/or b) is one or more than one heat-curable resin system based on phenolic, epoxy, amino and/or polyester resins.

5. The method as claimed in one or more than one preceding claim, **characterized in that** the contacting of a foamable phenolic resin with the cured ply in step c) is effected by foaming up the foamable phenolic resin within the cured ply and optionally adhering the foamable phenolic resin to the foamed ply.

6. The method as claimed in one or more than one preceding claim, **characterized in that** the contacting of foamed phenolic resin with the cured ply in step c) is effected by adhering the foamed phenolic resin to the cured ply.

7. The method as claimed in claim 6, **characterized in that** a structure is introduced onto the foam surface by mechanical milling and/or a structured plate being foamed in which is redetachable after fully curing the foam.

8. The method as claimed in one or more than one preceding claim, **characterized in that** reinforcing elements are introduced between the cured ply of the fibrous fleece and the foamable or foamed phenolic resin.

9. The method as claimed in claim 8, **characterized in that** the reinforcing elements are fabricated from glass, basalt, and/or plastic and/or carbon in the form of fibers, unidirectionals, wovens and/or fleeces and/or from the same composition of material as the outer plies.

10. The method as claimed in one or more than one preceding claim, **characterized in that** reinforcing elements are introduced into the foamable or foamed phenolic resin.

11. The method as claimed in claim 10, **characterized in that** the reinforcing elements have various geometries, for example in the form of stripes, diamonds, cassettes or stars.

12. The method as claimed in one or more than one preceding claim, **characterized in that** the contacting of a thermally foamable phenolic resin with the surface of one or more than one cured ply is accompanied by recesses being introduced in the form of channels and/or installation elements and other shapes for, for example, wall sockets and switches.

13. Essentially loadbearing and self-supporting parts of a building which are obtained by a method as claimed in one or more than one preceding claim.

## Revendications

1. Procédé de fabrication d'éléments sandwichs pour des parties de bâtiments essentiellement portantes ou autoportantes, comprenant les étapes suivantes:
a) fabrication d'au moins une couche d'un non-tissé fibreux à base de matières naturellement présentes, en particulier de chanvre, de lin, de jute, de sisal ou de kenaf, de coton, de laine et/ou de mélanges de ceux-ci, consolidé mécaniquement et imprégné avec un liant à base d'au moins un système de résine thermodurcissable,
b) durcissement du système de résine thermodurcissable pour la fabrication d'au moins une couche du non-tissé fibreux, dans lequel, avant et/ou pendant le durcissement, on applique au moins partiellement une structure de surface sur la couche du non-tissé fibreux et/ou on applique et on fixe au moins partiellement sur la surface de la couche durcie du non-tissé fibreux au moins un autre liant à base d'au moins un système de résine thermodurcissable,
c) mise en contact d'une résine phénolique expansible ou expansée à chaud avec la surface modifiée de l'étape b) d'au moins une couche durcie du non-tissé fibreux,
d) éventuellement égalisation de la température du composite fabriqué sous a) à c) à des températures situées dans une plage de 40 à 80°C,
e) durcissement de l'autre liant à base d'au moins un système de résine thermodurcissable éventuellement appliqué à l'étape b) dans une plage de 150 à 200°C, éventuellement sous une pression accrue.

2. Procédé selon la revendication 1, **caractérisé en ce que** l'on produit la structure de surface en incorporant un treillis, une grille ou un outil structuré avec différentes géométries lors du durcissement de la couche.

3. Procédé selon la revendication 2, **caractérisé en ce que** les outils structurés produisent des géométries polygonales, rondes, ovales, en nid d'abeilles, en forme de bouton, sur la surface.

4. Procédé selon au moins une des revendications précédentes, **caractérisé en ce que** l'on utilise comme liant à l'étape a) et/ou b) au moins un système de résine thermodurcissable à base de résines phénoliques, époxydes, aminées, et/ou polyester.

5. Procédé selon au moins une des revendications précédentes, **caractérisé en ce que** l'on met la couche durcie à l'étape c) en contact avec la résine phénolique expansible par moussage et éventuellement collage de celle-ci.

6. Procédé selon au moins une des revendications précédentes, **caractérisé en ce que** l'on colle la couche durcie à l'étape c) avec une résine phénolique expansée.

7. Procédé selon la revendication 6, **caractérisé en ce que** l'on applique sur la surface de mousse une structure par formation mécanique de mousse et/ou par moussage interne d'une plaque structurée séparable à nouveau après le durcissement de la mousse.

8. Procédé selon au moins une des revendications précédentes, **caractérisé en ce que** l'on introduit des éléments de renforcement entre la couche durcie du non-tissé fibreux et la résine phénolique expansible ou expansée.

9. Procédé selon la revendication 8, **caractérisé en ce que** les éléments de renforcement sont fabriqués à partir de verre, de basalte, et/ou de matière plastique et/ou de carbone sous forme de fibres, de canevas, de tissu et/ou de non-tissé et/ou de la même composition de matière que les couches de recouvrement.

10. Procédé selon au moins une des revendications précédentes, **caractérisé en ce que** l'on introduit des éléments de renforcement dans la résine phénolique expansible ou expansée.

11. Procédé selon la revendication 10, **caractérisé en ce que** les éléments de renforcement présentent différentes géométries, par exemple en forme de rubans, de losanges, de caissons ou d'étoiles.

12. Procédé selon au moins une des revendications précédentes, **caractérisé en ce que** la réalisation de découpes en forme de canaux et/ou d'éléments d'installation et d'autres formes par exemple pour des prises de courant et des interrupteurs se fait pendant la mise en contact d'une résine phénolique thermodurcissable avec la surface d'au moins une couche durcie.

13. Parties de bâtiments essentiellement portantes et autoportantes fabriquées par un procédé selon au moins une des revendications précédentes.
